# EUROPÄISCHE PATENTSCHRIFT

(11) **EP 0 564 695 B1**
(45) Veröffentlichungstag und Bekanntmachung des Hinweises auf die Patenterteilung: **10.01.1996**
(21) Anmeldenummer: 92115544.6
(22) Anmeldetag: 11.09.1992
(51) Int. Cl.: B65B 61/18

(54) **Verfahren und Vorrichtung zur Herstellung einer wiederverschliessbaren Verpackung**
Method and device for making a reclosable package
Procédé et dispositif pour fabriquer un emballage refermable

(30) Priorität: 04.04.1992 DE 4211333; 07.05.1992 DE 4214530
(43) Veröffentlichungstag der Anmeldung: 13.10.1993
(73) Patentinhaber: Tetra Laval Convenience Food GmbH & Co. KG, D-35216 Biedenkopf-Wallau (DE)
(72) Erfinder: Schmeck, Alfred, Dipl.-Ing., W-3560 Biedenkopf (DE); Fux, Rudolf, W-6345 Eschenburg 1 (DE)
(74) Vertreter: Missling, Arne, Dipl.-Ing.

(56) Entgegenhaltungen:
- DE-A- 3 925 746

## Beschreibung

Die Erfindung betrifft ein Verfahren und eine Vorrichtung zur Herstellung einer gegebenenfalls wiederverschließbaren Verpackung aus je einer miteinander heißversiegelten Ober- und Unterfolie und einem dazwischen anzuordnenden Verpackungsgut, wobei an der Verpackung ein Wiederverschließbereich vorgesehen ist, der aus einer Vielzahl zueinander komplementärer, in die Ober- und an dieser anliegenden Unterfolie geformter Schließelemente besteht.

Bei Verpackungen, die aus zwei Folien bestehen, die entweder miteinander heißversiegelbar oder nicht siegelfähig sind, ist es des öfteren erwünscht, daß sie nach dem Öffnen insoweit wiederverschließbar sind, daß das nichtverbrauchte Verpackungsgut nicht direkt der Umgebung ausgesetzt ist, beispielsweise in einem Kühlschrank. Dabei ist nicht an einen völlig abdichtenden Wiederverschluß gedacht, der nur durch eine erneute Heißversiegelung zu erreichen wäre; vielmehr sollen lediglich die Ober- und Unterfolie mechanisch miteinander verbunden sein.

Eine solche wiederverschließbare Verpackung ist bereits bekannt. Dabei ist an einer rechteckigen Verpackung eine der vier Seiten als Wiederverschließbereich gestaltet in der Form, daß neben dem Heißversiegelbereich eine in die Ober- oder Unterfolie geprägte, erhabene Dichtleiste vorgesehen ist, die zum Zwecke des Wiederverschließens in eine in die andere Folie eingeprägte Dichtnut gedrückt werden kann, wobei der Querschnitt der Dichtleiste geringfügig größer gehalten ist als der Querschnitt der Dichtnut, so daß tatsächlich eine mechanische Verklammerung der Ober- mit der Unterfolie möglich ist.

Ein derartiger Wiederverschließbereich fordert, daß die Dichtleiste an einer Stelle beginnend genau in die Dichtnut eingedrückt und nachfolgend in ganzer Länge mit der Dichtnut verbunden wird. Es erfordert einige Fingerfertigkeit, zunächst den Anfang des Wiederverschlusses herzustellen; aber auch seine weitere Ausbildung ist nicht sicher, weil es leicht möglich ist, daß die Dichtleiste neben die Dichtnut gerät. In jedem Falle ist die Herstellung des Wiederverschlusses umständlich und zeitraubend.

Die Erfindung hat sich deshalb die Aufgabe gestellt, durch ein geeignetes Verfahren eine wiederverschließbare Verpackung so zu gestalten, daß die Ober- von der Unterfolie beim Öffnen der Verpackung völlig getrennt werden kann, ohne daß der nachfolgende Wiederverschluß dadurch kompliziert wird. Dieser soll zudem sehr schnell herstellbar sein, ohne besondere Fingerfertigkeit zu erfordern. Dabei soll die Verpackung im Rahmen einer Verpackungslinie herstellbar sein.

Die DE-A-3 925 746 offenbart eine Verpackungsmaschine, mit einer Einrichtung zum Ausbilden von zum Wiederverschließen zusammenwirkenden Ausbuchtungen im Rand der Packungen. Die Ausbuchtungen werden unter Mitwirkung zweier Stifte erzeugt. Diese Druckschrift bildet den Oberbegriff der Ansprüche 1 und 7.

Erfindungsgemäß wird die Aufgabe zunächst durch ein Verfahren gelöst, bei dem der Wiederverschließbereich so eingespannt wird, daß er gegen die Umgebung abgedichtet ist, der Wiederverschließbereich durch atmosphärischen Unterdruck gegen ein ortsfestes Heizelement gezogen wird, der Wiederverschließbereich durch das Heizelement auf eine Temperatur erwärmt wird, bei der er leicht plastifizierbar ist, und der Wiederverschließbereich durch atmosphärischen Überdruck von dem Heizelement weg und/oder durch Verschieben des Heizelementes in matrizenartige Ausnehmungen in dessen Gegenstück gedrückt wird, wobei die Ausnehmungen währenddessen gekühlt sind und gleichzeitig evakuiert werden und so die Schließelemente geformt werden.

Gemäß der Erfindung kann der Noppen in der Unterfolie entweder zusammen mit dem Noppen in der Oberfolie geformt werden oder aber auch zuvor getrennt von diesem. Der Noppen in der Unterfolie sollte dann perforiert werden, damit beim Verschließen keine Luft zwischen den Noppen der Ober- und Unterfolie eingeschlossen wird. Durch die Noppen wird es möglich, auch adhäsive Folien zu verwenden, die ansonsten nur leicht haften würden. Diese Folien sind als Monofolien herstellbar und als solche voll recyclebar.

Die Erfindung ist weiterhin durch eine Vorrichtung zur Durchführung des Verfahrens gekennzeichnet, mit einer Verpackungslinie bestehend mindestens aus einer Siegelstation (A2) und einem Verformungswerkzeug (A4), bei der im Anschluß an die Siegelstation in der Verpackungslinie in Förderrichtung das Verformungswerkzeug vorgesehen ist, das Verformungswerkzeug in ein erstes und zweites Teilwerkzeug geteilt ist und zwischen zwei einander zugekehrten Preßflächen seiner beiden Teilwerkzeuge mindestens der Wiederverschließbereich einspannbar ist, in dem ersten Teilwerkzeug, von dessen Preßfläche ausgehend, eine durchgehende, dem Wiederverschließbereich folgende Ausnehmung vorgesehen ist, in der sich ein Heizelement befindet, diese Ausnehmung mit einem Auslaß versehen ist, der wechselweise an eine Unter- oder Überdruckquelle anschließbar ist, in dem zweiten Teilwerkzeug, von dessen Preßfläche ausgehend, den Schließelementen raumgleiche, matrizenartige Ausnehmungen vorgesehen sind, das zweite Teilwerkzeug mit einem Strömungskanal zu seiner Kühlung versehen ist und die matrizenartigen Ausnehmungen darin mit Verbindungsbohrungen versehen sind, die über einen gemeinsamen Auslaß an eine Unterdruckquelle anschließbar sind.

Die auf die erfindungsgemäße Weise herstellbare wiederverschließbare Verpackung gestattet es, nach der Entnahme eines Teiles des Verpackungsgutes die Ober- mit der Unterfolie relativ fest zu verbinden, ohne daß es dazu einer Einfädelung der Schließelemente bedürfte. Bei entsprechender Ausformung dieser Schließelemente genügt eine ungefähre Kongruenz der Ober- mit der Unterfolie, um sie relativ fest miteinander zu verbinden. Wegen der relativ hohen Plastizität des Verpackungsmateriales ist es insbesondere bei rechteckigen Verpackungen gleichgültig, ob dabei die Obergegen die Unterfolie um 180° verdreht ist, vorausgesetzt, die Anzahl, die Lage und die Form der Schließelemente stimmen auf beiden Längs- und Querseiten überein. Es hat sich gezeigt, daß ein oftmaliger Wiederverschluß möglich ist, ohne daß dessen mechanische Festigkeit beeinträchtigt ist.

Das Verfahren erlaubt es, die Schließelemente sehr variabel zu gestalten und der jeweiligen Verpackung anzupassen. Sie können beispielsweise auch unterschnitten sein, um einen sehr festen Wiederverschluß zu erreichen. Ihre Verformung ohne Druckstempel durch ein gasförmiges Druckmittel läßt eine solche konstruktive Gestaltung ohne weiteres zu. Außerdem ist der Verzicht auf bewegte Teile der Lebensdauer der Arbeitsstation förderlich. Die Kühlung der matrizenartigen Ausnehmungen sorgt dafür, daß die Schließelemente sehr schnell ihre Plastizität verlieren und leicht und ohne weitere Formveränderungen entformbar sind.

Weitere erfindungsgemäße Merkmale sind in den Unteransprüchen enthalten.

Die Erfindung wird nachfolgend anhand der Zeichnung an einem Ausführungsbeispiel näher erläutert. Es zeigen
- Fig. 1: eine Gesamtübersicht über eine Verpackungslinie mit einer erfindungsgemäßen Vorrichtung,
- Fig. 2: eine Arbeitsstation A4 aus Fig. 1, vergrößert,
- Fig. 3: eine nach dem erfindungsgemäßen Verfahren auf einer Verpackungslinie gemäß Fig. 1 hergestellten Verpackung,
- Fig. 4: einen Schnitt A-B aus Fig. 3 und
- Fig. 5: eine Einzelheit X aus Fig. 4, wiederum vergrößert,
sämtliche in schematischer Darstellung.

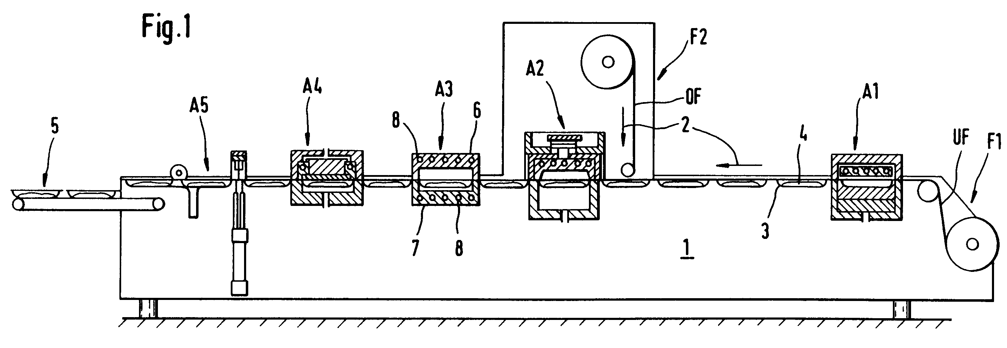

In der Fig. 1 ist ganz stark vereinfacht eine Verpackungslinie dargestellt, die zur Durchführung des erfindungsgemäßen Verfahrens mit Hilfe der entsprechenden Arbeitsmittel eingerichtet sein kann. Ein Maschinengestell 1 umfaßt zwei Fördereinrichtungen F1 und F2 zur Einführung der Unterfolie UF durch die Fördereinrichtung F1 und der Oberfolie OF durch die Fördereinrichtung F2. Die Förderrichtungen werden dabei durch Richtungspfeile 2 veranschaulicht. In einer Arbeitsstation A1 wird zunächst die Unterfolie UF verformt, so daß in der Unterfolie UF ein Speichervolumen 3 entsteht, das mit dem Verpackungsgut 4 befüllt werden kann. In einem anschließenden Heißversiegelungswerkzeug A2 wird die Oberfolie OF zugeführt, auf die Unterfolie UF aufgelegt und mit dieser versiegelt. Danach folgt in Förderrichtung ein Vorwärmwerkzeug A3 und daran anschließend ein Verformungswerkzeug A4, in dem ein Wiederverschließbereich 51 angefertigt wird. Schließlich erfolgt in einer Arbeitsstation A5 die Trennung der einzelnen Verpackungen 5 durch Längs- und Querschneideinrichtungen.

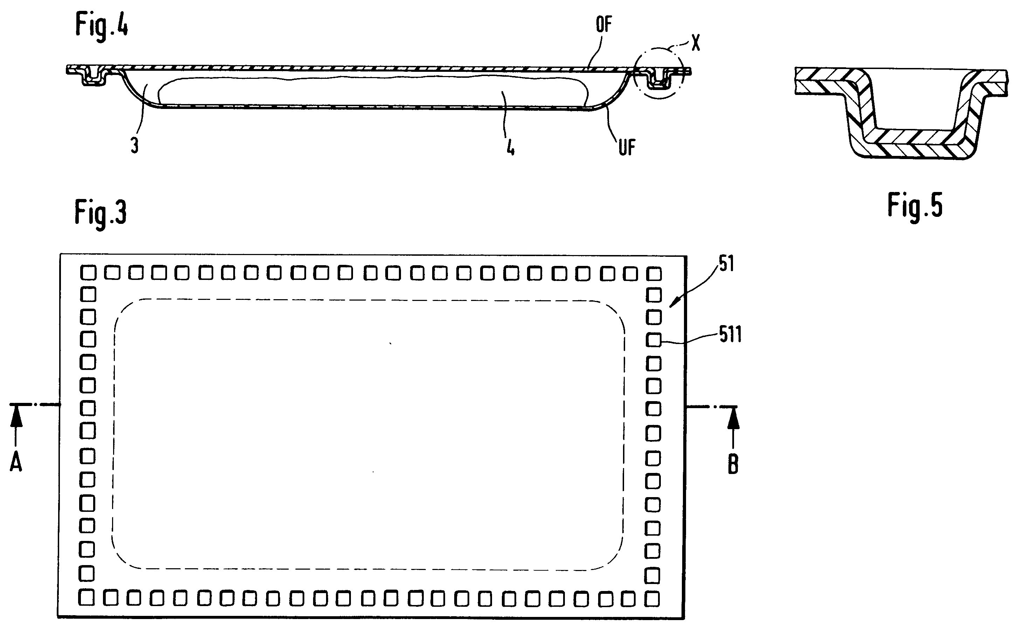

Das Vorwärmwerkzeug A3, das aus einem Ober- und einem Unterteil 6 und 7 besteht, ist mit einer Heizung 8 versehen, mit deren Hilfe der gesamte Wiederverschließbereich 51 (Fig. 3) erwärmt wird. Dessen Aufheizung geschieht unmittelbar durch die ihn einspannenden, unter Anpreßkraft aneinanderstoßenden Flächen des Oberteils 6 und des Unterteils 7. Die Vorwärmung des Wiederverschließbereiches 51, der die an der Verpackung 5 befindlichen Heißsiegelbereiche begleitet, erfolgt zweckmäßig auf eine Temperatur, die knapp unterhalb der für eine Plastifizierung der Folien OF und UF erforderlichen liegt.

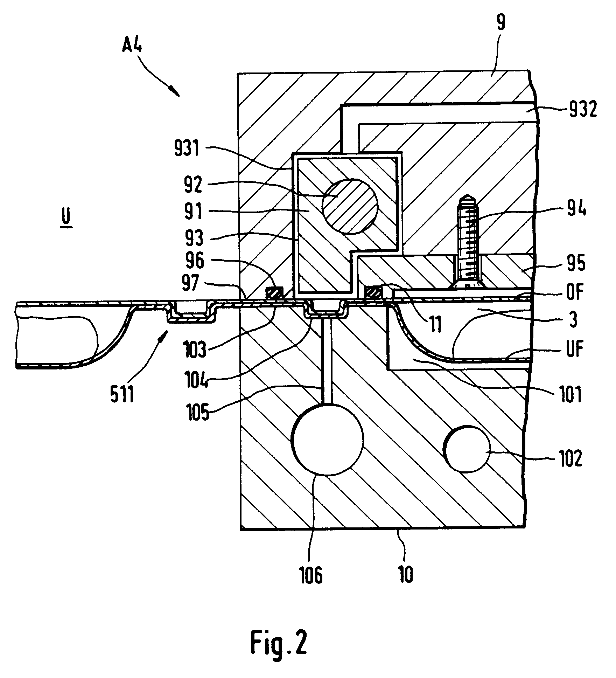

Das in Förderrichtung nachfolgende Verformungswerkzeug A4 ist in seinen Einzelheiten in Fig. 2 dargestellt. Es ist ebenfalls zweigeteilt und besteht aus einem Oberteil 9 und einem Unterteil 10. Es versteht sich, daß die Teilwerkzeuge 6; 7 und 9; 10 gegeneinander senkrecht beweglich sind; es ist üblich, daß das Unterteil 7 bzw. 10 absenkbar ausgeführt ist. Das Unterteil 10 ist mit einer Aufnahme 101 versehen, in der das Speichervolumen 3 Platz findet. Ein Strömungskanal 102 dient der Kühlung des Unterteiles 10. In dessen Preßfläche 103 sind Ausnehmungen 104 eingearbeitet, die jeweils mittels einer Verbindungsbohrung 105 an einen Auslaß 106 angeschlossen sind, der seinerseits mit einer Unterdruckquelle verbunden ist, so daß die Ausnehmungen 104 evakuierbar sind. Jede Ausnehmung 104 stellt eine Matrize für ein Schließelement 511 dar, wobei die Gesamtheit aller Schließelemente 511 den Wiedereinschaltbereich 51 bildet. Die Form der Ausnehmungen 104 bestimmt dabei auch die Form der Schließelemente 511. In Fig. 3 ist zu erkennen, daß es sich hier um im Querschnitt quadratische, im Längsschnitt rechteckige Schließelemente 511 ("Noppen") handelt.

Das Oberteil 9 ist mit einem Heizelement 91 versehen, das mit elektrischen Heizpatronen 92 beheizbar ist und nur wenig beweglich in einer durchgehenden Ausnehmung 93 untergebracht ist. Eine mit Schrauben 94 in dem Oberteil 9 befestigte Deckplatte 95 arretiert das Heizelement 91. Zwischen dem Heizelement 91 und der Wandung 931 der Ausnehmung 93 ist ein erheblicher Zwischenraum belassen, der eine pneumatische Verbindung zwischen einem Auslaß 932 und dem Raum unmittelbar über der mit der Unterfolie UF versiegelten Oberfolie OF herstellt, der sich über der Ausnehmung 104 des Unterteiles 10 befindet. Dieser Raum, der von der Umgebung U durch in Nuten 96 befindliche Dichtungen 11 pneumatisch getrennt ist, entspricht dem Wiederverschließbereich 51.

In den Fig. 3 bis 5 ist eine fertige, mit einem Wiederverschließbereich 51 bereits ausgestattete Verpackung 5 im einzelnen dargestellt. Die Oberfolie OF, bzw. die Unterfolie UF, die miteinander heißversiegelt sind und das Verpackungsgut 4 in dem Speichervolumen 3 luftdicht einschließen, sind schon auf Länge und Breite zugeschnitten. Der Wiederverschließbereich 511 ist hier allseitig vorgesehen. Er besteht aus einer Vielzahl von Schließelementen 511, die in der Fig. 5 im Schnitt gut zu erkennen sind. Es versteht sich, daß die Form der Schließelemente 511 relativ beliebig sein kann. In der Zeichnung sind sie zur bequemen Entformung aus den Ausnehmungen 104 mit einer leichten Entformungsschräge gezeichnet worden. Es ist aber auch durchaus möglich, die Schließelemente 511 unterschnitten auszuführen, genauso, wie ihr Querschnitt (in der Draufsicht der Fig. 3) beliebig ausgeführt sein kann.

Nachdem die noch unzerschnittenen Verpackungen 5 das Heißsiegelwerkzeug A2 verlassen und das Vorwärmwerkzeug A3 erreicht haben, werden sie hier vorgewärmt, um nämlich die in dem darauffolgenden Verformungswerkzeug A4 zur Verfügung stehende Zeit ausschließlich für die Herstellung der Schließelemente 511 verwenden zu können. Die Vorwärmung erfolgt bis zu einer Temperatur, bei der die Folien OF und UF gerade noch nicht plastisch verformbar sind. Anschließend wird die bereits vorgewärmte Verpackung 5 in das Verformungswerkzeug A4 gefördert. Der Wiederverschließbereich 51 wird von den Teilwerkzeugen 9 und 10 an dessen Preßflächen 97 und 103 eingespannt und durch die Dichtung 11 gegen die Umgebung U pneumatisch isoliert. Danach wird der Auslaß 932 mit einer Unterdruckquelle verbunden, so daß sich die Oberfolie OF (mit der daran gesiegelten Unterfolie UF) zwischen den beiden Dichtungen 11 an das Heizelement 91 anlegt. Mit Hilfe der Heizung 92 werden die beiden aneinanderliegenden Folien OF und UF so weit weiter aufgeheizt, daß sie plastisch verformbar werden. Danach wird der Auslaß 932 an eine Überdruckquelle angeschlossen, mit deren Hilfe die Folien OF und UF im Bereich der Ausnehmungen 104 im Unterteil 10 in diese hineingedrückt werden, wobei gleichzeitig die Ausnehmungen 104 mit Hilfe einer über den Auslaß 106 wirksamen Unterdruckquelle evakuiert werden und damit die Verformung der Folien OF und UF unterstützt wird. Auf diese Weise werden die Schließelemente 511 erzeugt. Währenddessen wird das Unterteil 10 mit Hilfe der über den Strömungskanal 102 wirksamen Kühlung so stark gekühlt, daß die Folien OF und UF ihre Plastizität in der Ausnehmung 104 rasch verlieren, wenn sie mit deren Wandung in Berührung kommen. Sie behalten dann lediglich eine gewisse Restelastizität, die ausreichend ist, um z.B. einen in der Ausnehmung 104 realisierten Unterschnitt zu überwinden. Die auf diese Weise vervollständigte Verpackung 5 wird anschließend in der Arbeitsstation A5 vereinzelt; die nunmehr kompletten Verpackungen 5 gelangen über ein Förderband aus dem Bereich der Verpackungsmaschine.

## Patentansprüche

1. Verfahren zur Herstellung einer wiederverschließbaren Verpackung aus je einer gegebenenfalls miteinander heißversiegelbaren Ober- und Unterfolie und einem dazwischen anzuordnenden Verpackungsgut, wobei an der Verpackung ein Wiederverschließbereich vorgesehen ist, der aus einer Vielzahl zueinander komplementärer, in die Ober- und die an dieser anliegenden Unterfolie geformter Schließelemente besteht, dadurch gekennzeichnet, daß der Wiederverschließbereich (51) so eingespannt wird, daß er gegen die Umgebung (U) abgedichtet ist, der Wiederverschließbereich (51) durch atmosphärischen Unterdruck gegen ein ortsfestes Heizelement (91) gezogen wird, der Wiederverschließbereich (51) durch das Heizelement (91) auf eine Temperatur erwärmt wird, bei der er leicht plastifizierbar ist, und der Wiederverschließbereich (51) durch atmosphärischen Überdruck von dem Heizelement (91) weg und/oder durch Verschieben des Heizelementes (91) in matrizenartige Ausnehmungen (104) in dessen Gegenstück gedrückt wird, wobei die Ausnehmungen (104) währenddessen gekühlt sind und gleichzeitig evakuiert werden und so die Schließelemente (511) geformt werden.

2. Verfahren nach Anspruch 1, dadurch gekennzeichnet, daß zunächst Noppen (Schließelemente 511) in der Unterfolie geformt und im Bodenbereich perforiert werden.

3. Verfahren nach Anspruch 2, dadurch gekennzeichnet, daß die Noppen in der Arbeitsstation (A1) geformt werden.

4. Verfahren nach Anspruch 2 oder 3, dadurch gekennzeichnet, daß die Perforierung vor Zulauf der Oberfolie (OF) erfolgt.

5. Verfahren nach Anspruch 1, dadurch gekennzeichnet, daß der Wiederverschließbereich (51) im Heißsiegelbereich liegt.

6. Verfahren nach Anspruch 1, dadurch gekennzeichnet, daß der Wiederverschließbereich (51) nach dem Heißsiegeln zunächst in einer gesonderten Station (A3) vorgewärmt wird.

7. Vorrichtung zur Durchführung des Verfahrens nach Anspruch 1, mit einer Verpackungslinie bestehend mindestens aus einer Siegelstation (A2) und einem Verformungswerkzeug (A4), wobei im Anschluß an die Siegelstation (A2) in der Verpackungslinie in Förderrichtung das Verformungswerkzeug (A4) vorgesehen ist, das Verformungswerkzeug (A4) in ein erstes und zweites Teilwerkzeug geteilt ist und zwischen zwei einander zugekehrten Preßflächen (97; 103) seiner beiden Teilwerkzeuge (9; 10) mindestens der Wiederverschließbereich (51) einspannbar ist, dadurch gekennzeichnet daß in dem ersten Teilwerkzeug (9), von dessen Preßfläche (97) ausgehend, eine durchgehende, dem Wiederverschließbereich (51) folgende Ausnehmung (93) vorgesehen ist, in der sich ein Heizelement (91) befindet, diese Ausnehmung (93) mit einem Auslaß (932) versehen ist, der wechselweise an eine Unter- oder Überdruckquelle anschließbar ist; daß in dem zweiten Teilwerkzeug (10), von dessen Preßfläche (103) ausgehend, den Schließelementen (511) raumgleiche, matrizenartige Ausnehmungen (104) vorgesehen sind; daß das zweite Teilwerkzeug (10) mit einem Strömungskanal (102) zu seiner Kühlung versehen ist und daß die matrizenartigen Ausnehmungen (104) darin mit Verbindungsbohrungen (105) versehen sind, die über einen gemeinsamen Auslaß (106) an eine Unterdruckquelle anschließbar sind.

8. Vorrichtung nach Anspruch 7, dadurch gekennzeichnet, daß in einer Verpackungslinie nach einem Heißversiegelwerkzeug (A2) ein Vorwärmwerkzeug (A3) vorgesehen ist, das Vorwärmwerkzeug (A3) aus einem Ober- und einem Unterteil (6; 7) besteht, zwischen denen der Wiederverschließbereich (51) einer Verpackung (5) einspannbar und gegen die Umgebung (U) abdichtbar ist und das Ober- und/oder das Unterteil (6; 7) und damit der Wiederverschließbereich (51) beheizbar sind.

9. Vorrichtung nach Anspruch 7, dadurch gekennzeichnet, daß die matrizenartigen Ausnehmungen (104) napfartig ausgeformt sind.

10. Vorrichtung nach einem der Ansprüche 7 bis 9, dadurch gekennzeichnet, daß die matrizenartigen Ausnehmungen (104) einen kreisrunden oder vierkantförmigen Querschnitt parallel zu der Ober- und Unterfolie (OF; UF) aufweisen.

11. Vorrichtung nach Anspruch 7, dadurch gekennzeichnet, daß die Verbindungsbohrungen (105) an den matrizenartigen Ausnehmungen (104) in einen gemeinsamen, mit der Unterdruckquelle verbundenen Auslaß (106) münden.

12. Vorrichtung nach Anspruch 7, dadurch gekennzeichnet, daß die Wandung (931) der durchgehenden Ausnehmung (93) in dem ersten Teilwerkzeug (9) von dem Heizelement (91) beabstandet ist.

13. Vorrichtung nach Anspruch 7 und 11, dadurch gekennzeichnet, daß der Zwischenraum zwischen dem Heizelement (91) und der Wandung (931) der durchgehenden Ausnehmung (93) den Auslaß (932) für die Unter- oder Überdruckquelle mit dem Wiederverschließbereich (51) verbindet.

14. Vorrichtung nach einem der Ansprüche 7 bis 13, dadurch gekennzeichnet, daß in dem Heizelement (91) Bohrungen für elektrische Heizpatronen (92) und in dem zweiten Teilwerkzeug (10) im Bereich der matrizenartigen Ausnehmungen (104) Strömungskanäle (102) vorgesehen sind, durch die ein Kühlmittelstrom geführt ist.

15. Vorrichtung nach einem der Ansprüche 7 bis 14, dadurch gekennzeichnet, daß beiderseits des Wiederverschließbereiches (51) in mindestens einem der Teilwerkzeuge (9) an dessen Preßfläche (97) eine Dichtung (11) ortsfest angebracht ist, die unter Einschluß der Ober- und Unterfolie (OF; UF) gegen die Preßfläche (103) des anderen Teilwerkzeuges (10) gedrückt wird, wenn der Wiederverschließbereich (51) zwischen den Preßflächen (97; 103) eingespannt ist.

16. Vorrichtung nach Anspruch 15, dadurch gekennzeichnet, daß als Dichtung (11) eine in einer Nut (96) angeordnete Dichtschnur verwendet wird.

17. Vorrichtung nach einem der Ansprüche 7 bis 16, dadurch gekennzeichnet, daß das erste Teilwerkzeug (9) als Oberteil des Verformungswerkzeuges (A4), das zweite Teilwerkzeug (10) als dessen Unterteil ausgebildet ist.

## Claims

1. A method for manufacturing a reclosable pack from, in each case, an upper and a lower film which are, if necessary, heat-sealable to each other and from a packed substance arranged therebetween, wherein a reclosable area is provided on the pack and comprises a multiplicity of closing members complementary to each other and formed in the upper film and the lower film adjacent thereto, **characterised in that** the reclosable area (51) is clamped in such a manner that it is sealed from the environment (U), the reclosable area (51) is drawn towards a stationary heating element (91) by atmospheric underpressure, the reclosable area (51) is heated by the heating element (91) to a temperature at which it can easily be plasticised, and the reclosable area (51) is pressed by atmospheric overpressure away from the heating element (91) and/or by the displacement of the heating element (91) into die-shaped recesses (104) in its countermember, wherein the recesses (104) are cooled in the meantime and are also emptied, and the closing members (511) are consequently formed.

2. A method according to Claim 1, **characterised in that first** of all nubs (closing members 511) are formed in the lower film and are perforated in the bottom area.

3. A method according to Claim 2, **characterised in that** the nubs are formed in the work station (A1).

4. A method according to Claim 2 or 3, **characterised in that** perforation occurs before supply of the upper film (OF).

5. A method according to Claim 1, **characterised in that** the reclosable area (51) is in the heat sealing area.

6. A method according to Claim 1, **characterised in that** after heat sealing the reclosable area (51) is preheated first of all in a separate station (A3).

7. A device for performing the method according to Claim 1, with a packing line comprising at least one sealing station (A2) and a deformation tool (A4), wherein the deformation tool (A4) is provided following the sealing station (A2) in the packing line in the direction of conveyance, the deformation tool (A4) is divided into a first and a second component and at least the reclosable area (51) can be clamped between two pressing surfaces (97; 103) - facing each other - of its two tool components (9; 10), **characterised in that** a continuous recess (93) corresponding to the reclosable area (51) is provided in the first tool component (9) and starts from the pressing surface (97) of the first tool component, and a heating element (91) is located in this recess (93) provided with an outlet (932) which can be connected alternately to an underpressure or overpressure source; that die-shaped recesses (104) are provided in the second tool component (10), start from the pressing surface (103) thereof and take up as much space as the closing elements (511); that the second tool component (10) is provided with a flow channel (102) for the cooling thereof, and the die-shaped recesses therein (104) are provided with connecting bores (105) which are connectable via a common outlet (106) to an underpressure source.

8. A device according to Claim 7, **characterised in that** a pre-warming tool (A3) is provided in a packing line downstream of a heat sealing tool (A2) and comprises an upper and lower part (6; 7), the reclosable area (51) of a pack (5) is clampable therebetween and is sealable from the environment, and the upper and/or lower part (6; 7) and, consequently the reclosable area (51), are heatable.

9. A device according to Claim 7, **characterised in that** the die-shaped recesses (104) have a basinlike shape.

10. A device according to any one of Claims 7 to 9, **characterised in that** the die-shaped recesses (104) have a circular or rectangular cross-section parallel to the upper and lower film (OF; UF).

11. A device according to Claim 7, **characterised in that** the connecting bores (105) on the die-shaped recesses (104) open into a common outlet (106) connected to the underpressure source.

12. A device according to Claim 7, **characterised in that** the wall (931) of the continuous recess (93) in the first tool component (9) is at a distance from the heating element (91).

13. A device according to Claims 7 and 11, **characterised in that** the space between the heating element (91) and the wall (931) of the continuous recess (93) connects the outlet (932) for the underpressure or overpressure source to the reclosable area (51).

14. A device according to any one of Claims 7 to 13, **characterised in that** bores for electric heating cartridges (92) are provided in the heating element (91), and flow channels (102) through which a current of cooling medium is conveyed are provided in the second tool component (10) in the region of the die-shaped recesses (104).

15. A device according to any one of Claims 7 to 14, **characterised in that** on both sides of the reclosable area (51) a seal (11) is fitted in a stationary manner to the pressing surface (97) of at least one of the tool components (9) and is pressed against the pressing surface (103) of the other tool component (10) while the upper and lower film (OF; UF) are enclosed, when the reclosable area (51) is clamped between the pressing surfaces (97; 103).

16. A device according to Claim 15, **characterised in that** a sealing cord arranged in a groove (96) is used as the seal (11).

17. A device according to any one of Claims 7 to 16, **characterised in that** the first tool component (9) is formed as the upper part of the deformation tool (A4) and the second tool component (10) as the lower part thereof.

## Revendications

1. Procédé de fabrication d'un emballage refermable à partir, chaque fois, d'une feuille supérieure et d'une feuille inférieure pouvant éventuellement être scellées l'une avec l'autre, et d'un produit à emballer à placer entre elles, étant entendu que, sur l'emballage, est prévue une zone de refermeture, qui est constituée d'une multiplicité d'éléments de fermeture, complémentaires entre eux et formés dans la feuille supérieure et dans la feuille inférieure placée contre elle,
caractérisé en ce que
- la zone de refermeture (51), est soumise à un serrage tel qu'elle soit rendue étanche par rapport à l'environnement (U),
- la zone de refermeture (51), est attirée, par une pression inférieure à la pression atmosphèrique, contre un élément chauffant (91), dont la position est fixe,
- la zone de refermeture (51), est chauffée par cet élément chauffant (91), à une température à laquelle elle peut être facilement plastifiée, et
- la zone, de refermeture (51), est, repoussée dans des creux formant matrice (104) prévus dans un contre-pièce correspondants, par une pression supérieure à la pression atmosphérique, qui les chasse de l'élément chauffant (91), et/ou, par un coulissement de l'élément chauffant (91), ces creux (104) étant, pendant cette opération, refroidis et, en même temps, en dépression, et les organes de fermeture (511) recevant ainsi leur forme.

2. Procédé suivant la revendication 1, caractérisé en ce que, d'abord, des nopes (organes de fermeture 511) sont formées dans la feuille inférieure et sont perforées dans la zone de leur fond.

3. Procédé suivant la revendication 2, caractérisé en ce que les nopes sont formées dans la station de formage (A1).

4. Procédé suivant la revendication 2 ou la revendication 3, caractérisé en ce que la perforation a lieu avant l'application de la feuille supérieure (OF).

5. Procédé suivant la revendication 1, caractérisé en ce que la zone, de refermeture (51), se trouve dans la zone de scellement à chaud.

6. Procédé suivant la revendication 1, caractérisé en ce que la zone, de refermeture (51), après scellement à chaud, est d'abord préchauffée dans une station spécialisée (A3).

7. Dispositif pour ma mise en oeuvre du procédé suivant la revendication 1, comportant une ligne d'emballage constituée d'au moins une station de scellement (A2) et d'un outil de formage (A4),
étant entendu que l'outil de formage (A4) est prévu à la suite de la station de scellement de la ligne d'emballage, dans le sens de déplacement,
que l'outil de formage (A4) est divisé en un premier et un deuxième élément d'outil (9, 10),
et qu'au moins la zone, de refermeture (51), peut être mise en serrage entre deux faces de pressage (97; 103) en vis-à-vis des deux éléments d'outil (9; 10),
caractérisé en ce que
- dans le premier élément d'outil (9) en partant de la face de pressage (97), il est prévu un évidement traversant (93), faisant suite à la zone (51) de refermeture et dans lequel se trouve un élément chauffant (91), cet évidement (93) est muni d'un canal d'échappement (932) qui peut être raccordé alternativement a une source de dépression et à une source de surpression;
- dans le deuxième élément d'outil (10) en partant de sa face de pressage (103), il est prévu des évidements (104) formant matrices, de même volume que les organes de fermeture (511; 93)
- le deuxième élément de l'outil (10) est muni d'un canal d'écoulement (102) destiné à son refroidissement, et
- les évidements formant matrices (104) sont équipés, à l'intérieur, d'alésages de liaison (105) qui peuvent être raccordés, par l'intermédiaire d'un canal d'échappement commun (106), à une source de dépression.

8. Dispositif suivant la revendication 7, caractérisé en ce que, dans une ligne d'emballage, après un outil de scellement à chaud (A2), il est prévu un outil de préchauffage (A3), lequel outil de préchauffage (A3) est constitué d'un élément supérieur et d'un élément inférieur (6; 7), entre lesquels la zone (51) de refermeture, d'un emballage (5) peut être mise en serrage et isolée de l'environnement (U), et l'élément supérieur et/ou l'élément inférieur (6; 7), et, avec eux, la zone (51) de refermeture, peuvent être chauffés.

9. Dispositif suivant la revendication 7, caractérisé en ce que les évidements formant matrices (104) présentent une forme de cuvettes.

10. Dispositif suivant l'une des revendications 7 à 9, caractérisé en ce que les évidements formant matrices (104) présentent, parallèlement à la feuille supérieure et à la feuille inférieure (OF; UF), une section de forme circulaire ou carrée.

11. Dispositif suivant la revendication 7, caractérisé en ce que les alésages de liaison (105), sur les évidements formant matrices (104) débouchent dans un canal d'échappement commun (106), raccordé à la source de dépression.

12. Dispositif suivant la revendication 7, caractérisé en ce que la paroi (931) de l'évidement traversant (93), situé dans le premier élément de l'outil (9), est disposé à une certaine distance de l'élément chauffant (91).

13. Dispositif suivant la revendication 7 et la revendication 11, caractérisé en ce que l'espace intercalaire entre l'élément chauffant (91) et la paroi (931) de l'évidement traversant (93), relie la zone (51) de refermeture au canal d'échappement (932) pour la source de dépression et pour la source de surpression.

14. Dispositif suivant l'une des revendications 7 à 13, caractérisé en ce que, dans l'élément chauffant (91), sont prévus des alésages destinés à recevoir des cartouches électriques de chauffage (92), et, dans le deuxième élément d'outil (10), dans la zone des évidements formant matrices (104), sont prévus des canaux d'écoulement (102) au travers desquels passent un courant de fluide de refroidissement.

15. Dispositif suivant l'une des revendications 7 à 14, caractérisé en ce qu'un joint d'étanchéité (11) fixe en position est disposé des deux côtés de la zone (51) de refermeture, sur la surface de pressage (97) d'au moins un des éléments d'outil (9), est disposé dans la zone d'enfoncement, l'une dans l'autre, de la feuille supérieure et de la feuille inférieure (OF; UF), joint qui est pressé contre la surface de pressage (103) de l'autre élément d'outil (10), quand la zone, de refermeture (51), est mise en serrage entre les surfaces de pressage (97; 103).

16. Dispositif suivant la revendication 15, caractérisé en ce que, comme joint d'étanchéité (11), on utilise un cordon d'étanchéité disposé dans une rainure (96).

17. Dispositif suivant l'une quelconque des revendications 7 à 16, caractérisé en ce que le premier élément d'outil (9) est réalisé sous la forme de l'élément supérieur d'outil de formage (A4), et que le deuxième élément d'outil (10) est réalisé sous la forme de son élément inférieur.
